# EUROPEAN PATENT APPLICATION

(11) **EP 4 394 823 A2**
(43) Date of publication of application: **03.07.2024**
(21) Application number: 23201216.1
(22) Date of filing: 02.10.2023
(51) Int. Cl.: H01G 4/012, H01G 4/30, H01G 4/224, H01G 4/008, H01G 4/232

(54) **MULTILAYER ELECTRONIC COMPONENT**

(30) Priority: 29.12.2022 KR 20220188453
(71) Applicant: Samsung Electro-Mechanics Co., Ltd., Gyeonggi-do (KR)
(72) Inventor: Kim, Je Jung, Suwon-si, Gyeonggi-do (KR); Oh, Seong Min, Suwon-si, Gyeonggi-do (KR); Kang, Jeong Mo, Suwon-si, Gyeonggi-do (KR); Kim, Min Hyang, Suwon-si, Gyeonggi-do (KR); Seo, Myung Duk, Suwon-si, Gyeonggi-do (KR)
(74) Representative: Grünecker Patent- und Rechtsanwälte PartG mbB

(57) **Abstract**

A multilayer electronic component, includes: a body including a dielectric layer and first and second internal electrodes alternately disposed with the dielectric layer interposed therebetween in a first direction, the body having first and second surfaces opposing each other in a first direction, third and fourth surfaces connected to the first and second surfaces and opposing each other in a second direction, and fifth and sixth surfaces connected to the first to fourth surfaces and opposing each other in a third direction, wherein the first internal electrode includes a first main portion having one end portion in contact with the third surface and the other end portion disposed to be spaced apart from the fourth surface, and a first protrusion protruding toward the fifth and sixth surfaces between one end portion and the other end portion of the first main portion, Lb/La satisfies 0.05 or more and 0.4 or less.

## Description

### CROSS-REFERENCE TO RELATED APPLICATION(S)

This application claims benefit of priority to Korean Patent Application No. 10-2022-0188453 filed on December 29, 2022 in the Korean Intellectual Property Office, the disclosure of which is incorporated herein by reference in its entirety.

### TECHNICAL FIELD

The present disclosure relates to a multilayer electronic component.

A multilayer ceramic capacitor (MLCC), a multilayer electronic component, may be a chip-type condenser mounted on the printed circuit boards of any of various types of electronic products, such as an image display device, including a liquid crystal display (LCD) or a plasma display panel (PDP), a computer, a smartphone, or a mobile phone, serving to charge or discharge electricity therein or therefrom.

In accordance with miniaturization, slimming, and the multifunctionalization of electronic products, miniaturization of chip components is required, and the mounting of electronic components is also highly-integrated. In response to this trend, a space between mounted electronic components is being minimized.

In addition, as industry interest in electronic components increases, ceramic capacitors are also required to have high capacitance, high reliability, and high strength characteristics to be used in automobiles or infotainment systems. In particular, with the advancement of automotive ADAS technology, demand for MLCCs in electronics having high-capacitance, high-reliability is increasing, and new technological development is required.

In the case of a conventional case designed in a general rectangular or bottleneck-type internal electrode pattern, a space between the internal electrode and the body becomes narrow due to bar deformation and miscutting during a cutting process, so that an end of the internal electrode in a longitudinal direction may be easily exposed to moisture.

Therefore, there is a need for structural improvement to sufficiently secure a space between the inner electrode and the body due to causes such as miscutting, or the like, during the cutting process.

### SUMMARY

An aspect of the present disclosure is to solve a problem of a deterioration in moisture resistance reliability that may occur when a space between an internal electrode and a body, spaced apart from each other, becomes narrow due to bar deformation or miscutting during a cutting process of a multilayer electronic component.

An aspect of the present disclosure is to provide a multilayer electronic component that may be determined as defective only by an appearance thereof, when an incorrect position is cut during a cutting process of the multilayer electronic component.

However, the object of the present invention is not limited to the above, and will be more easily understood in the process of describing specific embodiments of the present disclosure.

According to an aspect of the present disclosure, a multilayer electronic component includes: a body including a dielectric layer and first and second internal electrodes alternately disposed with the dielectric layer interposed therebetween in a first direction, the body having first and second surfaces opposing each other in a first direction, third and fourth surfaces connected to the first and second surfaces and opposing each other in a second direction, and fifth and sixth surfaces connected to the first to fourth surfaces and opposing each other in a third direction; a first external electrode disposed on the third surface; and a second external electrode disposed on the fourth surface, wherein the first internal electrode includes a first main portion having one end portion in contact with the third surface and the other end portion disposed to be spaced apart from the fourth surface, and a first protrusion protruding toward the fifth and sixth surfaces between the one end portion and the other end portion of the first main portion, and the second internal electrode includes a second main portion having one end portion in contact with the fourth surface and the other end portion disposed to be spaced apart from the third surface, and a second protrusion protruding toward the fifth and sixth surfaces between the one end portion and the other end portion of the second main portion, wherein, an average size of the body in the second direction is La, and an average size of the first and second protrusions in the second direction is Lb, Lb/La satisfies 0.05 or more and 0.4 or less.

According to another aspect of the present disclosure, a multilayer electronic component, includes: a body including a dielectric layer and first and second internal electrodes alternately disposed with the dielectric layer interposed therebetween in a first direction, the body having first and second surfaces opposing each other in a first direction, third and fourth surfaces connected to the first and second surfaces and opposing each other in a second direction, and fifth and sixth surfaces connected to the first to fourth surfaces and opposing each other in a third direction; a first external electrode disposed on the third surface; and a second external electrode disposed on the fourth surface, wherein the body includes a capacitance formation portion in which the dielectric layer and the first and second internal electrodes are alternately disposed in the first direction, and a cover portion disposed on one surface and the other surface of the capacitance formation portion in the first direction, wherein the cover portion includes a plurality of dummy electrodes disposed to be spaced apart from each other in the third direction, the dummy electrodes not overlapping the first and second internal electrodes, when viewed in the first direction.

According to another aspect of the present disclosure, a multilayer electronic component includes: a body including: a dielectric layer; internal electrodes that are alternately stacked with the dielectric layer along a stacking direction; and dummy electrodes disposed to be spaced apart along a width of the body, the dummy electrodes do not overlap the internal electrodes along the width direction and the stacking direction; and a first external electrode and a second external electrode disposed on the body.

### BRIEF DESCRIPTION OF DRAWINGS

The above and other aspects, features, and advantages of the present disclosure will be more clearly understood from the following detailed description, taken in conjunction with the accompanying drawings:
FIG. 1 is a perspective view schematically illustrating a multilayer electronic component according to an embodiment of the present disclosure;
FIG. 2 is a cross-sectional view taken along line I-I' of FIG. 1;
FIG. 3 is a cross-sectional view taken along line II-II' of FIG. 1;
FIG. 4 is an exploded perspective view illustrating an exploded body of the multilayer electronic component according to an embodiment of the present disclosure;
FIGs. 5A and 5B are each a plan view illustrating a shape of an internal electrode according to an embodiment of the present disclosure;
FIG. 6 is a plan view illustrating shapes and cutting lines of internal electrode patterns disposed on a dielectric ceramic green sheet used in a lamination process according to an embodiment of the present disclosure;
FIG. 7 is a plan view illustrating a position of a C2 cutting line in region A of FIG. 6;
FIGs. 8A and 8B are each a perspective view illustrating a shape of a laminate according to the position of the C2 cutting line illustrated in FIG. 7, after the cutting process;
FIGs. 9A and 9B are each a plan view illustrating a shape of an internal electrode according to another embodiment of the present disclosure;
FIGs. 10A and 10B are each a plan view illustrating a shape of a dummy electrode included in a cover portion according to another embodiment of the present disclosure;
FIGs. 11A and 11B are each a plan view illustrating a position of the C2 cutting line, in a region corresponding to region A of FIG. 6; and
FIGs. 12A and 12B are each a perspective view illustrating a shape of a laminate according to the position of the C2 cutting line illustrated in FIGs. 11A and 11B, after the cutting process.

### DETAILED DESCRIPTION

Hereinafter, embodiments of the present disclosure will be described as follows with reference to the attached drawings. The present disclosure may, however, be exemplified in many different forms and should not be construed as being limited to the specific embodiments set forth herein. Rather, these embodiments are provided so that this disclosure will be thorough and complete, and will fully convey the scope of the disclosure to those skilled in the art. Accordingly, shapes and sizes of elements in the drawings may be exaggerated for clear description, and elements indicated by the same reference numeral are the same elements in the drawings.

In the drawings, irrelevant descriptions will be omitted to clearly describe the present disclosure, and to clearly express a plurality of layers and areas, thicknesses may be magnified. The same elements having the same function within the scope of the same concept will be described with use of the same reference numerals. Throughout the specification, when a component is referred to as "comprise" or "comprising," it means that it may further include other components as well, rather than excluding other components, unless specifically stated otherwise.

In the drawings, a first direction may be defined as a direction in which first and second internal electrodes are alternately disposed with a dielectric layer interposed therebetween, or a thickness (T) direction or a stacking direction. Among the second and third directions, which are perpendicular to the first direction, the second direction may be defined as a length (L) direction, and the third direction may be defined as a width (W) direction.

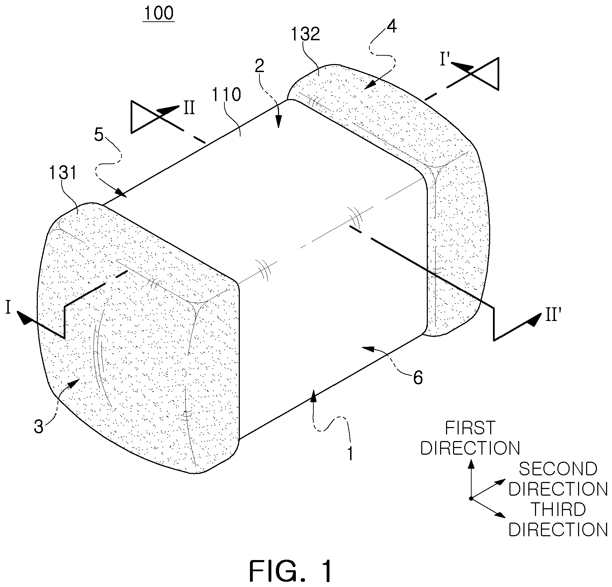

FIG. 1 is a perspective view schematically illustrating a multilayer electronic component according to an embodiment of the present disclosure.

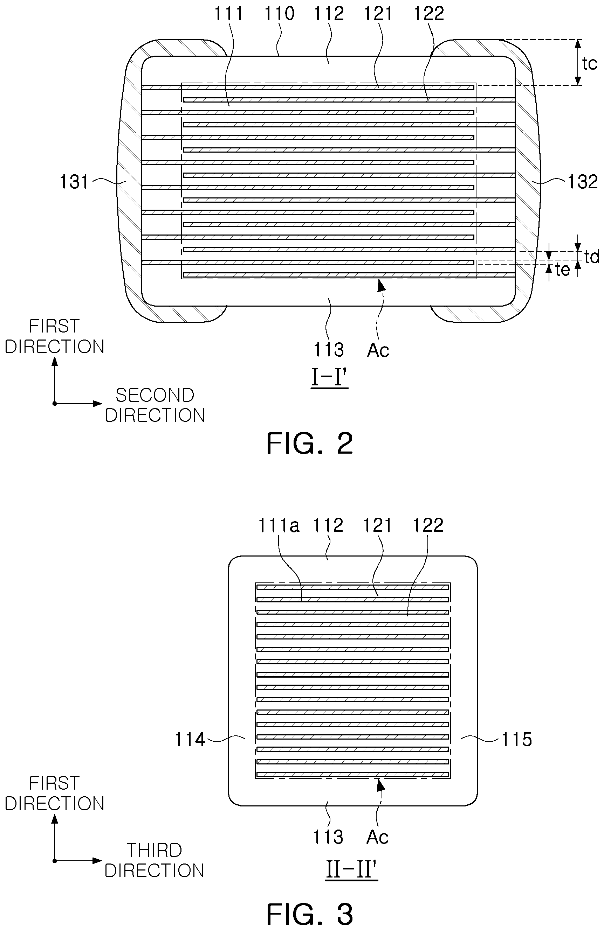

FIG. 2 is a cross-sectional view taken along line I-I' of FIG. 1.

FIG. 3 is a cross-sectional view taken along line II-II' of FIG. 1.

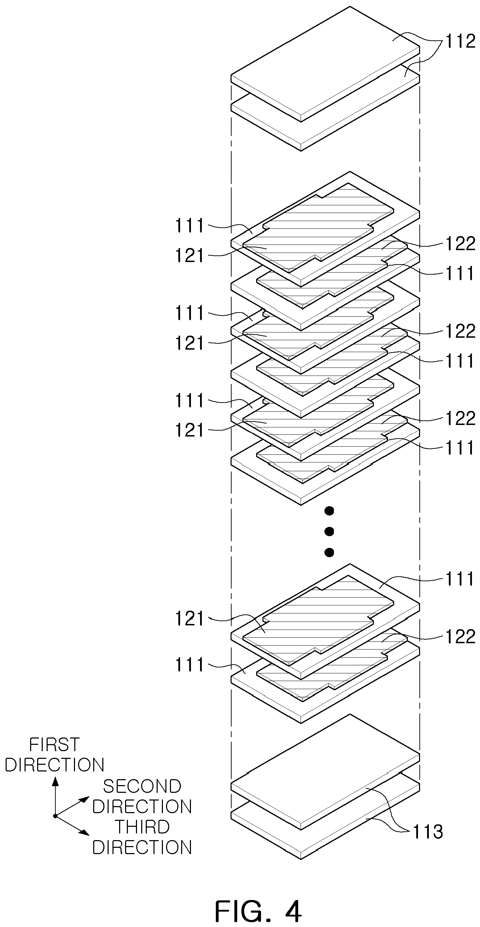

FIG. 4 is an exploded perspective view illustrating an exploded body of the multilayer electronic component according to an embodiment of the present disclosure.

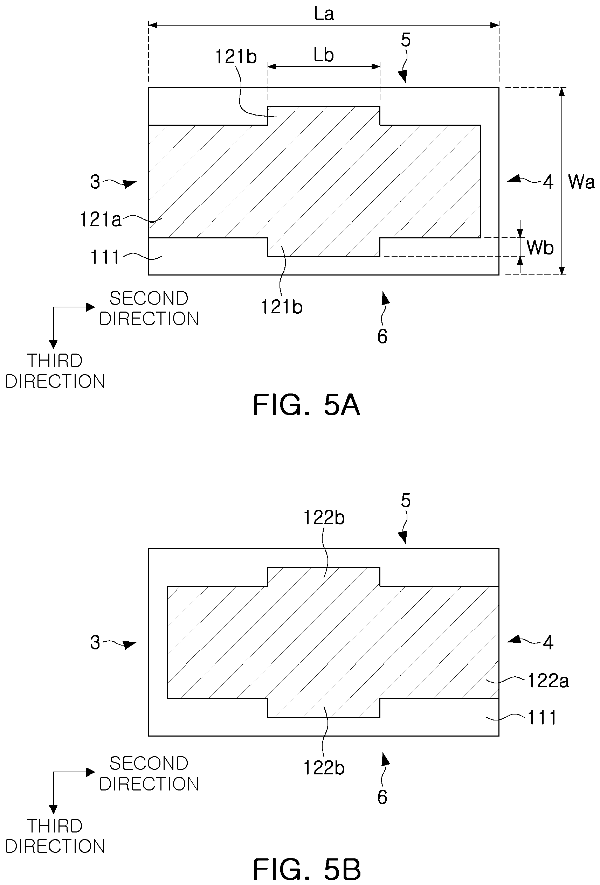

FIGs. 5A and 5B are each a plan view illustrating a shape of an internal electrode according to an embodiment of the present disclosure.

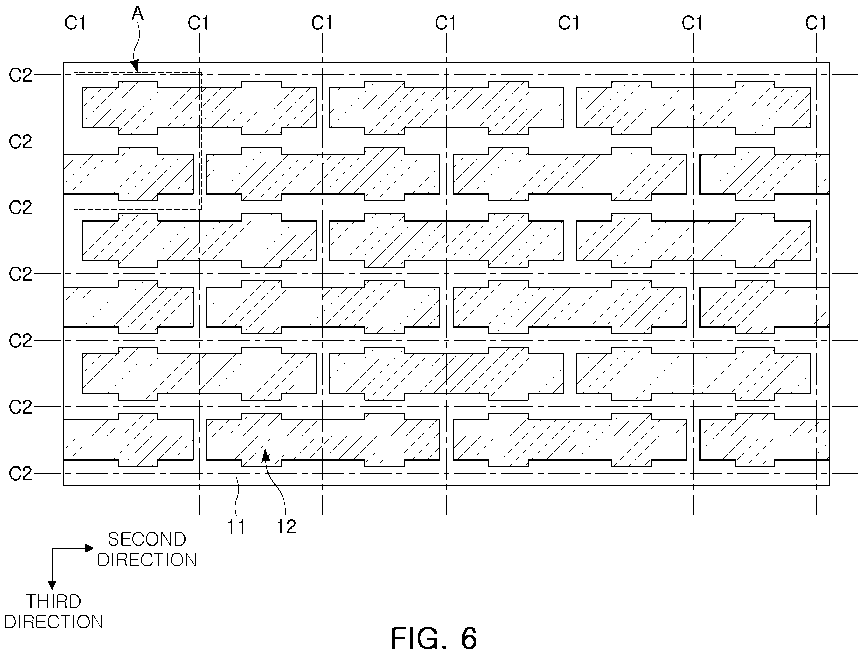

FIG. 6 is a plan view illustrating shapes and cutting lines of internal electrode patterns disposed on a dielectric ceramic green sheet used in a lamination process according to an embodiment of the present disclosure.

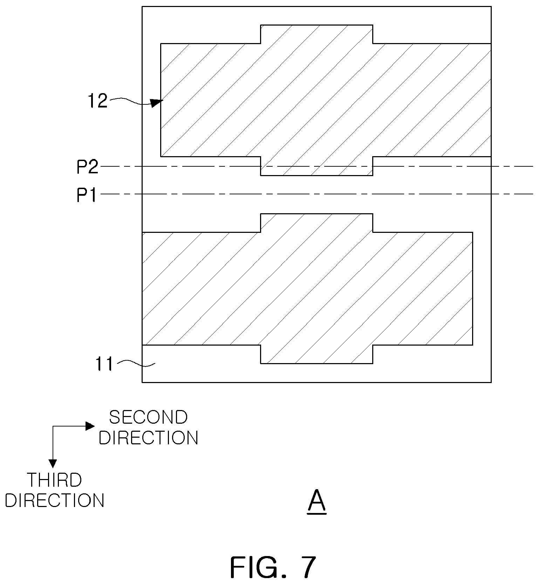

FIG. 7 is a plan view illustrating a position of a C2 cutting line, in region A of FIG. 6.

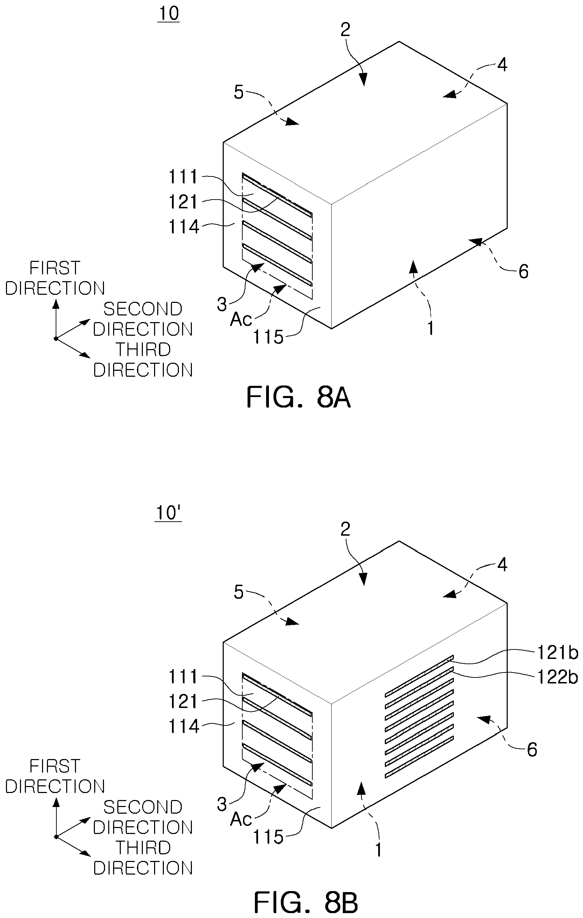

FIGs. 8A and 8B are each a perspective view illustrating a shape of a laminate according to the position of the C2 cutting line illustrated in FIG. 7, after the cutting process.

Hereinafter, a multilayer electronic component 100 according to an embodiment of the present disclosure will be described in detail with reference to FIGS. 1 to 8.

According to an aspect of the present disclosure, the multilayer electronic component 100 includes: a body including a dielectric layer 111 and first and second internal electrodes 121 and 122 alternately disposed with the dielectric layer interposed therebetween in a first direction, the body having first and second surfaces 1 and 2 opposing each other in a first direction, third and fourth surfaces 3 and 4 connected to the first and second surfaces and opposing each other in a second direction, and fifth and sixth surfaces 5 and 6 connected to the first to fourth surfaces and opposing each other in a third direction; a first external electrode 131 disposed on the third surface; and a second external electrode 132 disposed on the fourth surface, wherein the first internal electrode includes a first main portion 121a having one end portion in contact with the third surface and the other end portion disposed to be spaced apart from the fourth surface, and a first protrusion 121b protruding toward the fifth and sixth surfaces between one end portion and the other end portion of the first main portion, and the second internal electrode includes a second main portion 122a having one end portion in contact with the fourth surface and the other end portion disposed to be spaced apart from the third surface and a second protrusion 122b protruding toward the fifth and sixth surfaces between one end portion and the other end portion of the second main portion, wherein, when an average size of the body in a second direction is La, and an average size of the first and second protrusions in a second direction is Lb, Lb/La satisfies 0.05 or more and 0.4 or less.

The body 110 has a dielectric layer 111 and internal electrodes 121 and 122, alternately stacked.

The body 110 is not limited to a particular shape, and may have a hexahedral shape or a shape similar to the hexahedral shape, as illustrated in the drawings. The body 110 may not have the shape of a hexahedron having perfectly straight lines because ceramic powder particles included in the body 110 are contracted in a process in which the body is sintered. However, the body 110 may have a substantially hexahedral shape.

The body 110 may have first and second surfaces 1 and 2 opposing each other in a first direction, third and fourth surfaces 3 and 4 connected to the first and second surfaces 1 and 2 and opposing each other in a second direction, and fifth and sixth surfaces 5 and 6 connected to the first and second surfaces 1 and 2, connected to the third and fourth surfaces 3 and 4, and opposing each other in a third direction.

A plurality of dielectric layers 111 forming the body 110 may be in a sintered state, and adjacent dielectric layers 111 may be integrated with each other, such that boundaries therebetween may not be readily apparent without a scanning electron microscope (SEM).

According to an embodiment of the present disclosure, a raw material for forming the dielectric layer 111 is not particularly limited, as long as sufficient electrostatic capacitance may be obtained therewith. For example, the raw material for forming the dielectric layer 111 may be a barium titanate (BaTiO₃)-based material, a lead composite perovskite-based material, a strontium titanate (SrTiO₃)-based material, or the like. The barium titanate-based material may include BaTiO₃-based ceramic powder, and the ceramic powder may be, for example, BaTiO₃, (Ba₁₋ₓCaₓ)TiO₃, Ba(Ti_{1-y}Ca_{y})O₃, (Ba₁₋ₓCaₓ)(Ti_{1-y}Zr_{y})O₃ or Ba(Ti_{1-y}Zr_{y})O₃, in which calcium (Ca), zirconium (Zr), or the like, are partially dissolved in BaTiO₃, and the like.

In addition, a raw material of the dielectric layer 111 may include various ceramic additives, organic solvents, binders, dispersants, and the like, added to powder particles such as barium titanate (BaTiO₃) powder particles, or the like, according to an object of the present disclosure.

Meanwhile, an average thickness "td" of the dielectric layer 111 is not particularly limited. For example, the average thickness "td" of the dielectric layer 111 may be 10 µm or less. In addition, the average thickness "td" of the dielectric layer 111 may be arbitrarily set according to desired characteristics or uses. For example, in the case of high-voltage electronic components, the average thickness of the dielectric layer 111 may be 2.8 um or less, and in the case of small IT electronic components, the average thickness of the dielectric layer 111 may be 0.35 um to achieve miniaturization and high capacitance, but the present disclosure is not limited thereto.

The average thickness "td" of the dielectric layer 111 may refer to an average thickness of the dielectric layer 111 disposed between the first and second internal electrodes 121 and 122 in the first direction. Meanwhile, when the body 110 includes a plurality of dielectric layers 111, the average thickness "td" of the dielectric layers 111 may refer to an average thickness of at least one of the plurality of dielectric layers 111.

The average thickness "td" of the dielectric layer 111 may be measured by scanning an image of a cross-section of the body 110 in length and thickness directions (L-T directions) with a scanning electron microscope (SEM) with a magnification of 10,000. More specifically, an average value may be measured by measuring a thickness of one dielectric layer at 30 equally spaced points in the length direction from the scanned image. The 30 points having equal intervals may be designated in the capacitance formation portion Ac. In addition, if the average value is measured by extending the average value measurement to 10 dielectric layers, the average thickness of the dielectric layers can be more generalized. Other methods and/or tools appreciated by one of ordinary skill in the art, even if not described in the present disclosure, may also be used.

The body 110 may include a capacitance formation portion disposed inside the body 110, and in which a dielectric layer 111 and first and second internal electrodes 121 and 122 are alternately disposed in a first direction.

The capacitance formation portion Ac is a portion contributing to forming capacitance of the capacitor, and may be formed by repeatedly stacking a plurality of first and second internal electrodes 121 and 122 with the dielectric layer 111 interposed therebetween.

In an embodiment, an upper cover portion 112 may be disposed on one surface of the capacitance formation portion Ac in the first direction, and a lower cover portion 113 may be disposed on the other surface of the capacitance formation portion in the first direction.

The upper cover portion 112 and the lower cover portion 113 may be formed by stacking a single dielectric layer or two or more dielectric layers on the upper and lower surfaces of the capacitance formation portion Ac in a thickness direction, respectively, and the upper cover portion 112 and the lower cover portion 113 may serve to basically prevent damage to the internal electrodes due to physical or chemical stress.

The upper cover portion 112 and the lower cover portion 113 may not include internal electrodes, and may include the same material as that of the dielectric layer 111.

That is, the upper cover portion 112 and the lower cover portion 113 may include a ceramic material, for example, a barium titanate (BaTiO₃)-based ceramic material.

A thickness of the cover portions 112 and 113 is not particularly limited. However, an average thickness of the cover portions 112 and 113 may be 100 um or less, 30 um or less or 20 um or less. Here, the average thickness of the cover portions 112 and 113 may refer to an average thickness of each of the first cover portion 112 and the second cover portion 113.

The average thickness of the cover portions 112 and 113 may refer to a size thereof in the first direction, and may be a value obtained by averaging sizes of the cover portions 112 and 113 measured in the first direction at five points having equal intervals above or below the capacitance formation portion Ac.

In an embodiment, margin portions 114 and 115 may be disposed on one surface and the other surface of the capacitance formation portion Ac in a third direction.

Referring to FIG. 2, the margin portions 114 and 115 may include a margin portion 114 disposed on the fifth surface 5 of the body 110 and a margin portion 115 disposed on the sixth surface 6 thereof. That is, the margin portions 114 and 115 may be disposed on both end surfaces of the body in a third direction (width direction).

The margin portions 114 and 115 may refer to a region between both ends of the first and second internal electrodes 121 and 122 and an interface of the body 110, as illustrated in FIG. 2.

The margin portions 114 and 115 may basically serve to prevent damages to the internal electrodes due to physical or chemical stresses.

The margin portions 114 and 115 may be formed by applying a conductive paste to a ceramic green sheet, except where margin portions are to be formed, to form internal electrodes.

In addition, in order to suppress a step by the internal electrodes 121 and 122, after the internal electrodes are cut so as to be exposed to the fifth and sixth surfaces 5 and 6 of the body after stacking, the margin portions 114 and 115 may also be formed by stacking a single dielectric layer or two or more dielectric layers on both side surfaces of the capacitance formation portion Ac in the third direction (width direction).

Meanwhile, an average width of the margin portions 114 and 115 is not particularly limited. However, in order to more easily implement miniaturization and high capacitance of the multilayer electronic component, the average width of the margin portions 114 and 115 may be 100 um or less, 20 um or less, or 15 um or less.

The average width of the margin portions 114 and 115 may refer to an average size of the margin portions 114 and 115 in a third direction, and may be a value obtained by averaging sizes of the margin portions 114 and 115 measured at five points having equal intervals in the third direction in terms of the capacitance formation portion Ac.

The internal electrodes 121 and 122 and the dielectric layer 111 are alternately disposed in a first direction.

The internal electrodes 121 and 122 may include first and second internal electrodes 121 and 122. The first and second internal electrodes 121 and 122 may be alternately disposed to oppose each other with the dielectric layer 111 constituting the body 110 interposed therebetween, and may be respectively connected to the third and fourth surfaces 3 and 4 of the body 110. Specifically, one end of the first internal electrode 121 may be connected to the third surface, and one end of the second internal electrode 122 may be connected to the fourth surface. That is, the internal electrodes 121 and 122 in an embodiment may be in contact with the third surface 3 or the fourth surface 4.

As illustrated in FIG. 3, the first internal electrode 121 may be spaced apart from the fourth surface 4 and exposed through the third surface 3, and the second internal electrode 122 may be spaced apart from the third surface 3 and exposed through the fourth surface 4. A first external electrode 131 may be disposed on the third surface 3 of the body and connected to the first internal electrode 121, and a second external electrode 132 may be disposed on the fourth surface 4 and connected to the second internal electrode 122.

That is, the first internal electrode 121 may be connected to the first external electrode 131 without being connected to the second external electrode 132, and the second internal electrode 122 may be connected to the second external electrode 132 without being connected to the first external electrode 132. Accordingly, the first internal electrode 121 may be formed to be spaced apart from the fourth surface 4 by a predetermined distance, and the second internal electrode 122 may be formed to be spaced apart from the third surface 3 by a predetermined distance. In this case, the first and second internal electrodes 121 and 122 may be electrically isolated from each other by the dielectric layer 111 disposed in a middle.

Referring to FIG. 4, the body 110 may be formed by alternately stacking a ceramic green sheet on which the first internal electrode 121 is printed and a ceramic green sheet on which the second internal electrode 122 is printed, and then sintering the same.

A material for forming internal electrodes 121 and 122 is not particularly limited, and a material having excellent electrical conductivity may be used. For example, the internal electrodes 121 and 122 may include nickel (Ni), copper (Cu), palladium (Pd), silver (Ag), gold (Au), platinum (Pt), tin (Sn), or tungsten (W), titanium (Ti), and alloys thereof.

In addition, the internal electrodes 121 and 122 may be formed by printing a conductive paste for internal electrodes including at least one of nickel (Ni), copper (Cu), palladium (Pd), silver (Ag), gold (Au), platinum (Pt), tin (Sn), tungsten (W), and alloys thereof, on a ceramic green sheet. A method of printing the conductive paste for internal electrodes may be a screen printing method, a gravure printing method, or the like, but the present disclosure is not limited thereto.

Meanwhile, an average thickness "te" of the internal electrodes 121 and 122 is not particularly limited, but may be, for example, 3 µm or less. In addition, an average thickness of the internal electrodes 121 and 122 may be arbitrarily set according to desired characteristics or uses. For example, in the case of a high-voltage electronic component, an average thickness of the internal electrodes 121 and 122 may be less than 1 um, and in the case of a small IT electronic component, in order to achieve miniaturization and high capacitance, the average thickness of the internal electrodes 121 and 122 may be 0.35 um or less, but the present disclosure is not limited thereto.

An average thickness "te" of at least one of the plurality of internal electrodes 121 and 122 may refer to an average size of the internal electrodes 121 and 122 in a first direction.

The average thickness of the internal electrodes 121 and 122 may be measured by scanning an image of a cross-section of the body 110 in length and thickness directions (L-T) with a scanning electron microscope (SEM) at a magnification of 10,000. More specifically, an average value may be measured by measuring a thickness of one of the internal electrodes 121 and 122 at 30 equally spaced points in the length direction in the scanned image. The 30 equally spaced points may be designated in the capacitance formation portion Ac. In addition, if the average value is measured by extending the average value measurement to 10 internal electrodes 121 and 122, the average thickness of the internal electrodes can be more generalized. Other methods and/or tools appreciated by one of ordinary skill in the art, even if not described in the present disclosure, may also be used.

Referring to FIGs. 5A and 5B, the first internal electrode 121 according to an embodiment of the present disclosure includes a first main portion 121a having one end portion in contact with the third surface 3 and the other end portion disposed to be spaced apart from the fourth surface 4, and a first protrusion 121b protruding toward the fifth and sixth surfaces 5 and 6 between one end portion and the other end portion of the first main portion 121a, and the second internal electrode 122 includes a second main portion 122a having one end portion in contact with the fourth surface 4 and the other end portion disposed to be spaced apart from the third surface 3, and a second protrusion 122b protruding toward the fifth and sixth surfaces 5 and 6 between one end portion and the other end portion of the second main portion 122a.

In a process of manufacturing a multilayer electronic component 100, a cutting process in which a plurality of internal electrode patterns 12 disposed on a dielectric ceramic green sheet 11 are stacked, pressed, and then cut, may be performed. FIG. 6 is a plan view illustrating a shape of the internal electrode pattern 12 disposed on the dielectric ceramic green sheet and cutting lines C1 and C2 during the cutting process.

The cutting line C1 may be positioned at substantially regular intervals in the second direction, and the C2 cutting line may be perpendicular to the C1 cutting line and may be positioned at substantially regular intervals in the third direction. Since the C1 cutting line is a region where a portion of the internal electrode pattern 12 are cut, if the C1 cutting line is not located at an intended position, a capacitance deviation may occur in each manufactured multilayer electronic component 100.

Meanwhile, the cutting line C2 is a line cutting a space in which the internal electrode patterns 12 are spaced apart in the third direction, and a cutting surface, cut by the C2 cutting line may form the fifth and sixth surfaces 5 and 6 of the body 110 after sintering the laminate 10. Unlike the C1 cutting line, when the position of the C2 cutting line is not accurate, the internal electrodes 121 and 122 may be cut by the C2 cutting line, or cut without securing a sufficient distance between the internal electrodes 121 and 122 and the fifth and sixth surfaces 5 and 6, and thus moisture resistance reliability of the multilayer electronic component 100 may deteriorate.

Specifically, referring to FIG. 6, cutting by the cutting line C2 may be performed along the line P1 or line P2 (as illustrated in FIG. 7) due to a process error. When the cutting line is performed along the line P1, a distance between the internal electrode pattern 12 and the C2 cutting surface is narrowed, so that it may be difficult to sufficiently secure a distance between the fifth and sixth surfaces 5 and 6 and the internal electrodes 121 and 122 after sintering. When the distance between the fifth and sixth surfaces 5 and 6 of the body 110 and the internal electrodes 121 and 122 is narrowed, end portions of the internal electrodes 121 and 122 in contact with the third and fourth surfaces 3 and 4 where external electrodes 131 and 132 are to be formed may be easily exposed to a moisture environment.

Accordingly, in an embodiment of the present disclosure, since protrusions 121b and 122b, protruding toward the fifth and sixth surfaces 5 and 6 of the body 110 between one end portion and the other end portion of main portions 121a and 122a are formed, even if an error occurs in the cutting process along the cutting line C2, by sufficiently securing the distance between the internal electrodes 121 and 122 and the fifth and sixth surfaces 5 and 6, the moisture resistance reliability of the multilayer electronic component 100 may be improved. In addition, the protrusions 121b and 122b of the present disclosure may be exposed to the fifth and sixth surfaces 5 and 6, when an error occurs in the cutting process, to serve to determine that moisture resistance reliability thereof is poor only by visually observing the multilayer electronic component 100.

Meanwhile, referring to FIGs. 5A and 5B, in an embodiment of the present disclosure, an average size of the body 110 in a second direction may be referred to as La, and an average size of the first and second protrusions 121b and 122b in the second direction may be referred to as Lb. In this case, when Lb/La is less than 0.05, it may be difficult to determine whether moisture resistance reliability thereof is poor after the cutting process, and when Lb/La exceeds 0.4, an effect of improving the moisture resistance reliability may be reduced. Therefore, in an embodiment of the present disclosure, by adjusting Lb/La to satisfy 0.05 or more and 0.4 or less, it is possible to easily determine that moisture resistance reliability thereof is poor after the cutting process, and the moisture resistance reliability of the multilayer electronic component may be improved.

Referring to FIGs. 8A and 8B, in laminates 10 and 10' immediately after the cutting process, whether or not the protrusions 121b and 122b are exposed may be determined depending on the cutting by the cutting line C2 is performed depending on which of the lines P1 and P2 is cut by the cutting line C2. In the laminate 10 cut along the line P1, as the protrusions 121b and 122b are not cut, the protrusions 121b and 122b are not exposed to the fifth and sixth surfaces 5 and 6 of the laminate 10, while in the laminate 10' cut along the line P2, as the protrusions 121b and 12b are cut, the protrusions 121b and 122b are exposed to the fifth and sixth surfaces 5 and 6 of the laminate 10'. Whether or not the protrusions 121b and 122b are exposed may be similarly determined in the body 110 in which the laminates 10 and 10' are sintered, and depending on whether the protrusions 121b and 122b are exposed to the fifth and sixth surfaces 5 and 6 of the body 110, it may be determined whether or not the multilayer electronic component 100 has poor moisture resistance reliability.

Referring to FIGs. 5A and 5B, in an embodiment, an average size of the body 110 in a third direction may be referred to as Wa, and an average size of the first and second protrusions 121b and 122b in the third direction may be referred to as Wb. In this case, when Wb/Wa is less than 0.4, distribution of a distance between the internal electrodes 121 and 122 and the fifth and sixth surfaces 5 and 6 increases, so that an effect of improving the moisture resistance reliability may decrease, and when Wb/Wa exceeds 0.6, the number of determinations of poor moisture resistance reliability may be excessively increased. Therefore, in an embodiment, by adjusting Wb/Wa to satisfy 0.4 or more and 0.6 or less, it is possible to easily determine that moisture resistance reliability thereof after the cutting process is poor, and the moisture resistance reliability of the multilayer electronic component may be improved.

A method of measuring an average size Lb of the protrusions 121b and 122b in the second direction is not particularly limited. For example, after polishing the multilayer electronic component 100 in the third direction to expose a cross-section of the multilayer electronic component 100 in the first and second directions, it may be measured by taking an average value after measuring the size of the plurality of protrusions 121b and 122b in the second direction in an image observed through an optical microscope (OM) or a scanning electron microscope (SEM). However, it is preferable that the cross-section thereof in the first and second directions is a cross-section polished to a state in which only the protrusions 121b and 122b are exposed without exposing the main portions 121a and 122a. Other methods and/or tools appreciated by one of ordinary skill in the art, even if not described in the present disclosure, may also be used.

A method of measuring the average size Wb of the protrusions 121b and 122b in the third direction is not particularly limited. For example, after polishing a cross-section of the multilayer electronic component 100 in the second direction to expose the cross-section thereof in the first and third directions, so that the protrusions 121b and 122b are not exposed, a size of the main portions 121a and 122a in the third direction is measured by, for example, optical microscopy or scanning electron microscopy. Thereafter, a size of the overall internal electrodes 121 and 122 including the main portions 121a and 122a and the protrusions 121b and 122b is measured by being additionally polished in the second direction so that the protrusions 121b and 122b are exposed. Next, an average size Wb of the protrusions 121b and 122b in the third direction may be measured by subtracting the size of the main portions 121a and 122a in the third direction from the overall size of the internal electrodes 121 and 122 in the third direction, and then dividing the same by 2. If the measurement is performed on a plurality of internal electrodes and then an average value is taken, the average size Wb of the protrusions 121b and 122b in the third direction can be further generalized. Other methods and/or tools appreciated by one of ordinary skill in the art, even if not described in the present disclosure, may also be used.

In addition, a method of measuring an average size La of body 110 in the second direction and an average size Wa of thereof in the third direction is not particularly limited. La may be measured by measuring the size of the body 110 in the second direction at a plurality of points along the first direction in a cross-section measuring the Lb and taking an average value thereof, and Wa may be measured by measuring the size of the body 110 in the third direction at a plurality of points along the first direction in a cross-section measuring Wb, and taking an average value thereof. La and Wa may be measured by, for example, optical microscopy or scanning electron microscopy. Other methods and/or tools appreciated by one of ordinary skill in the art, even if not described in the present disclosure, may also be used.

In an embodiment, the first and second protrusions 121b and 122b may be disposed to be spaced apart from the fifth and sixth surfaces 5 and 6. Accordingly, the first and second internal electrodes 121 and 122 may be spaced apart from the fifth and sixth surfaces 5 and 6 simultaneously, and thus the capacitance formation portion Ac of the multilayer electronic component 100 may be more effectively protected from external impact or permeation of external moisture thereinto.

Meanwhile, in addition to the above-described embodiments, the first and second protrusions 121b and 122b may have various shapes. As an example, the first and second protrusions 121b and 122b may be disposed to be spaced apart from the third and fourth surfaces 3 and 4 to be clearly distinguished from the first and second main portions 121a and 122a, and as another example, corners of the first and second protrusions 121b and 122b may have a rounded shape. In this case, the corners of the first and second protrusions 121b and 122b may refer to an edge connected to the first and second main portions 121a and 1222a and an edge connecting side surfaces of the first and second protrusions.

External electrodes 131 and 132 are disposed on the body 110.

The external electrodes 131 and 132 may include a first external electrode 131 in contact with the third surface 3 of the body 110 and a second external electrode 132 in contact with the fourth surface 4.

In the present embodiment, a structure in which the multilayer electronic component 100 has two external electrodes 131 and 132 is described, but the number and shape of the external electrodes 131 and 132 may be changed depending on the shape of the internal electrodes 121 and 122 or other purposes.

Meanwhile, the external electrodes 131 and 132 may be formed using any material as long as electrical conductivity is implemented therein, such as metal, or the like, and a specific material thereof may be determined in consideration of electrical characteristics, structural stability, and the like, and may further have a multilayer structure.

For example, the external electrodes 131 and 132 may include an electrode layer disposed on the body 110 and a plating layer disposed on the electrode layer.

As a more specific example of the electrode layer, the electrode layer may be a sintered electrode including a conductive metal and glass or a resin-based electrode including a conductive metal and resin.

In addition, the electrode layer may have a form in which a sintered electrode and a resin-based electrode are sequentially formed on the body. In addition, the electrode layer may be formed by transferring a sheet including a conductive metal onto the body, or formed by transferring a sheet containing a conductive metal onto the sintered electrode.

As the conductive metal included in the electrode layer, a material having excellent electrical conductivity may be used and is not particularly limited. For example, the conductive metal may be at least one of nickel (Ni), copper (Cu), and alloys thereof, and preferably may be copper (Cu) to improve adhesion to the body.

The plating layer serves to improve mounting characteristics. The type of the plating layer is not particularly limited, and may be a plating layer containing at least one of nickel (Ni), tin (Sn), palladium (Pd), and alloys thereof, and may be formed of a plurality of layers.

For a more specific example of the plating layer, the plating layer may be a Ni plating layer or a Sn plating layer, may have a form in which a Ni plating layer and a Sn plating layer are sequentially formed on the electrode layer, and a form in which a Sn plating layer, a Ni plating layer, and a Sn plating layer are sequentially formed. In addition, the plating layer may include a plurality of Ni plating layers and/or a plurality of Sn plating layers.

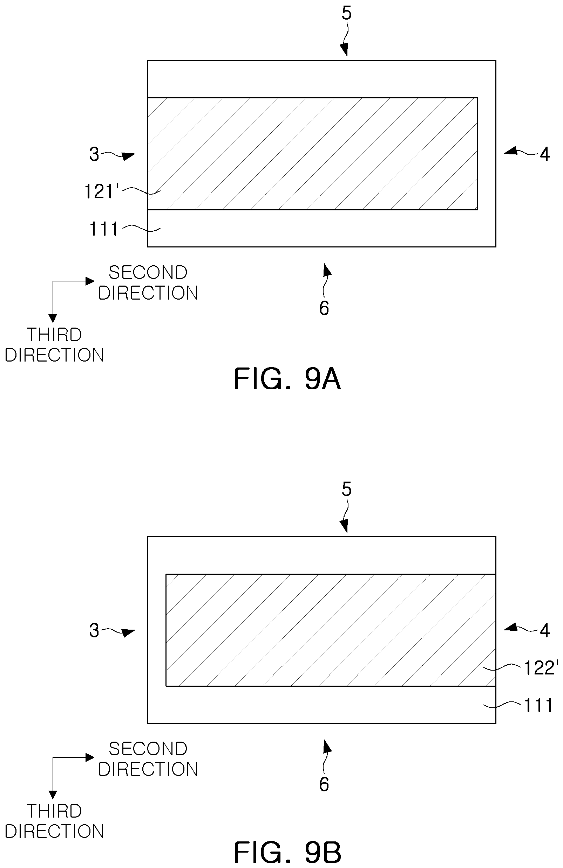

FIGs. 9A and 9B are each a plan view illustrating a shape of an internal electrode according to another embodiment of the present disclosure.

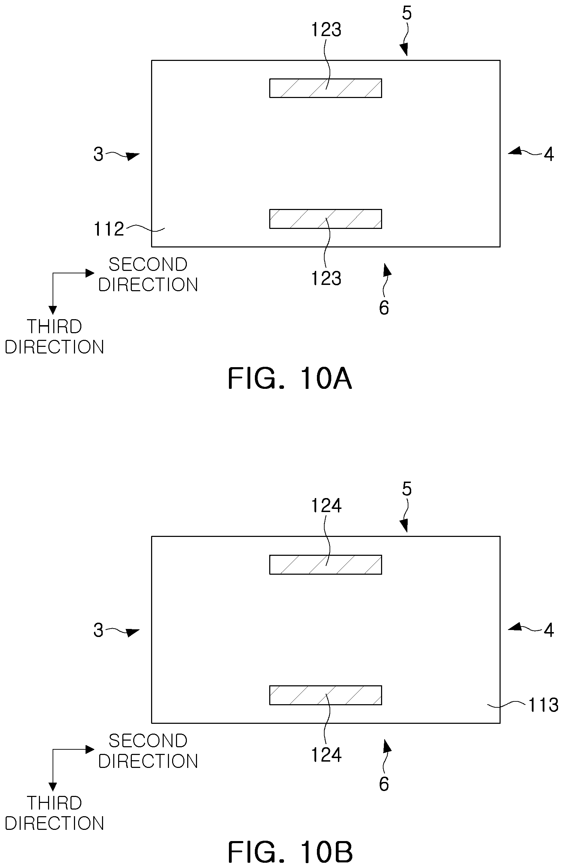

FIGs. 10A and 10B are each a plan view illustrating a shape of a dummy electrode included in a cover portion according to another embodiment of the present disclosure.

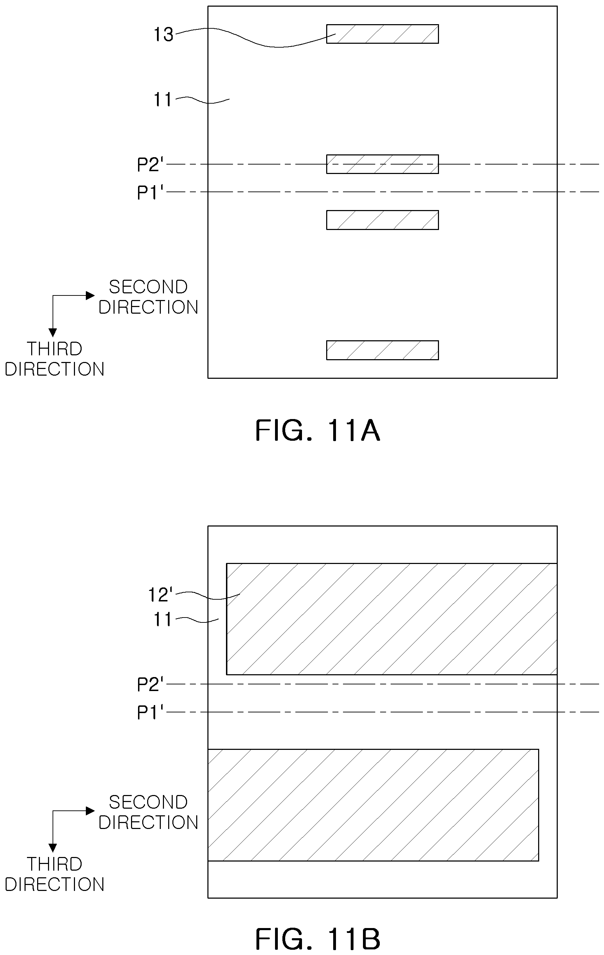

FIGs. 11A and 11B are each a plan view showing the position of the cutting line C2 in a region corresponding to region A of FIG. 6.

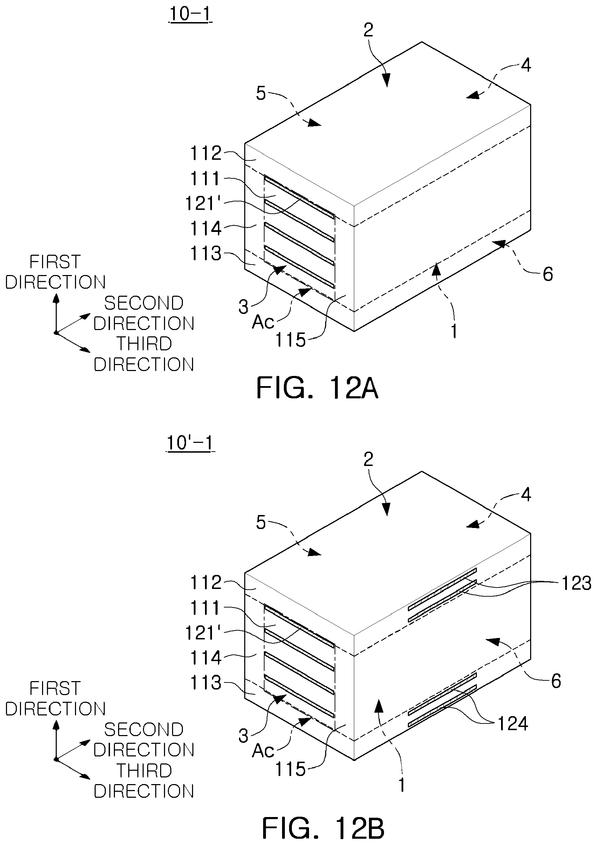

FIGs. 12A and 12B are each a perspective view illustrating a shape of a laminate according to a position of the cutting line C2 illustrated in FIGs. 11A and 11B, after the cutting process.

Hereinafter, a multilayer electronic component according to another embodiment of the present disclosure will be described in detail with reference to FIGS. 9 to 12, but descriptions overlapping the multilayer electronic component 100 according to an embodiment of the present disclosure will be omitted. Meanwhile, in this specification, it is expressed as "another" embodiment of the present disclosure, but it should be noted that this is meant to exclude the application of structural features according to another embodiment of the present disclosure in an embodiment and various embodiments of the present disclosure.

In a multilayer electronic component according to another embodiment of the present disclosure, the body 110 includes a capacitance formation portion Ac in which a dielectric layer 111 and first and second internal electrodes are alternately disposed in a first direction, and cover portions 112 and 113 disposed on one surface and the other surface of the capacitance formation portion Ac in a first direction, the cover portions 112 and 113 includes a plurality of dummy electrodes 123 and 124 disposed to be spaced apart from each other in a third direction, and the dummy electrodes 123 and 124 do not overlap the first and second internal electrodes 121 and 122 when viewed from the first direction.

Meanwhile, referring to FIGs. 9A and 9B, internal electrodes 121' and 122' of the multilayer electronic component according to another embodiment of the present disclosure, may have a form consisting only of main portions 121a and 112a, not including protrusions 121b and 122b, unlike the internal electrodes 121 and 122 according to an embodiment of the present disclosure described above. That is, the internal electrodes 121' and 122' according to another embodiment of the present disclosure may not have a shape protruding in the third direction.

However, a structure of the dummy electrodes 123 and 124 according to another embodiment of the present disclosure, to be described later, can be similarly applied to the multilayer electronic component 100 according to an embodiment of the present disclosure.

Referring to FIGs. 10A and 10B, the cover portions 112 and 113 may include a plurality of dummy electrodes 123 and 124 disposed to be spaced apart from each other in a third direction. In this case, when viewed from the first direction, the dummy electrodes 123 and 124 may not overlap the first and second electrodes 121' and 122'. Accordingly, the dummy electrodes 123 and 124 may improve the moisture resistance reliability of the multilayer electronic component, like the protrusions 121b and 122b of the internal electrodes according to an embodiment of the present disclosure, and may play a role in reducing a moisture reliability defect rate of the multilayer electronic component due to an error in a cutting process.

Referring to FIGs. 11A and 11B, a relative position of the internal electrode pattern 12' and the dummy pattern 13 according to a position of a cutting line C2 may be determined. Cutting by the cutting line C2 may be performed along a line P1' or along a line P2' due to errors in the process. When the cutting is performed along the line P2', a distance between the internal electrode pattern 12' and the cutting surface C2 becomes narrow, so that it may be difficult to sufficiently secure a distance between the fifth and sixth surfaces 5 and 6 of the body 110 and the internal electrodes 121' and 122' after sintering. As described above, when being cut along the line P2', as a result of a portion of dummy patterns 13 being cut, the dummy electrodes 123 and 124 may be exposed to the fifth and sixth surfaces 5 and 6 of the body 110 after sintering. Accordingly, since it is possible to determine that the multilayer electronic component has poor moisture resistance reliability only by visually observing the multilayer electronic component, the moisture resistance reliability defect rate of the multilayer electronic component may be reduced.

Meanwhile, when cutting by the cutting line C2 is performed along a line P1', a distance between the internal electrode pattern 12' and the C2 cutting surface may be sufficiently secured, and as a result thereof, a distance between the internal electrode patterns 121' and 122' and the fifth and sixth surfaces 5 and 6 of the body 110 after sintering may also be sufficiently secured. In this case, since the line P1' does not cut the dummy pattern 13, dummy electrodes 123 and 124 are not exposed on the fifth and sixth surfaces 5 and 6 of the body 110 after sintering. Accordingly, it is possible to improve moisture resistance reliability of the multilayer electronic component, and it is possible to easily determine whether the moisture resistance reliability is poor or not, by appearance thereof.

Referring to FIGs. 12A and 12B, in laminates 10-1 and 10'-1, immediately after the cutting process, whether or not the dummy electrodes 123 and 124 are exposed may be determined depending on which of the lines P1' and P2' is cut by the cutting line C2. In the laminate 10-1 cut along the line P1', as the dummy electrodes 123 and 124 are not cut, the dummy electrodes 123 and 124 are not exposed to the fifth and sixth surfaces 5 and 6 of the laminate 10-1, whereas in the laminate 10'-1 cut along the line P2', as the dummy electrodes 123 and 124 are cut, the dummy electrodes 123 and 124 are exposed to the fifth and sixth surfaces 5 and 6 of the laminate 10'-1. Whether or not the dummy electrodes 123 and 124 are exposed can be similarly checked on the body 110 where the laminates 10-1 and 10'-1 are sintered, and depending on whether the dummy electrodes 123 and 124 are exposed to the fifth and sixth surfaces 5 and 6 of the body 110, it is possible to determine whether or not the multilayer electronic component 100 has poor moisture resistance reliability.

In an embodiment, the dummy electrodes 123 and 124 may be disposed to be spaced apart from the fifth and sixth surfaces 5 and 6. Accordingly, the first and second internal electrodes 121' and 122' may be disposed simultaneously to be spaced apart from the fifth and sixth surfaces 5 and 6, and thus the capacitance forming portion of the multilayer electronic component 100 Ac may be more effectively protected from external impact or permeation of external moisture.

Meanwhile, in addition to the above-described embodiments, the dummy electrodes 123 and 124 may have various shapes. As an example, the dummy electrodes 123 and 124 may be disposed to be spaced apart from the third and fourth surfaces 3 and 4 and not be connected to the first and second external electrodes 131 and 132. As another example, corners of the dummy electrodes 123 and 124 may have a rounded shape. In this case, the corners of the dummy electrodes 123 and 124 may refer to edges connecting respective side surfaces of the dummy electrodes 123 and 124.

### (Example)

In a structure in which internal electrodes 121 and 122 have main portions 121a and 122a and protrusions 121b and 122b, such as in the multilayer electronic component 100 according to an embodiment of the present disclosure, Tables 1 and 2 below show that results of evaluating moisture resistance reliability of a multilayer electronic component having different values of La/Lb or Wb/Wa.

Moisture resistance reliability evaluation was conducted for 15 hours under an environment of 85°C, 85% of relative humidity, and 1.5 Vr for 750 samples of the multilayer electronic component for each test number, and the samples whose insulation resistance value decreased by 10^7 times from an initial value were judged as a defective product.

**[Table 1]**

| Test No. | Lb/La | Wb/Wa | Moisture resistance reliability evaluation (the number of defective products / the total number of samples) |
|---|---|---|---|
| 1 | 0.05 | 0.50 | 0/750 |
| 2 | 0.10 | 0.50 | 0/750 |
| 3 | 0.20 | 0.50 | 0/750 |
| 4 | 0.30 | 0.50 | 0/750 |
| 5 | 0.40 | 0.50 | 0/750 |
| 6 | 0.50 | 0.50 | 1/750 |
| 7 | 0.60 | 0.50 | 2/750 |
| 8 | 0.70 | 0.50 | 6/750 |

Table 1 illustrates that moisture resistance reliability of a multilayer electronic component is evaluated while fixing Wa/Wb and adjusting La/Lb.

Referring to Test Nos. 6 to 8 in which Lb/La satisfies 0.50, 0.60, and 0.70, it can be seen that as Lb/La increases exceeding 0.4, defective products increase in moisture resistance reliability evaluation. It is determined that it is because the spaced distance between the internal electrodes 121 and 122 and the fifth and sixth surfaces 5 and 6 is not sufficient in a region where La/Lb exceeds 0.40, so that an effect of improving moisture resistance reliability is reduced.

On the other hand, in the case of test Nos. 1 to 5 in which Lb/La is 0.4 or less, it can be determined that the number of defective products is 0 in the moisture resistance reliability evaluation.

Therefore, it can be seen that when Lb/La is adjusted to 0.40 or less as in one embodiment of the present disclosure, the effect of improving moisture resistance reliability of the multilayer electronic component is excellent.

**[Table 2]**

| Test No. | Lb/La | Wb/Wa | Moisture resistance reliability evaluation (the number of defective products / the total number of samples) |
|---|---|---|---|
| 1 | 0.3 | 0.10 | 2/750 |
| 2 | 0.3 | 0.20 | 1/750 |
| 3 | 0.3 | 0.30 | 2/750 |
| 4 | 0.3 | 0.40 | 0/750 |
| 5 | 0.3 | 0.50 | 0/750 |
| 6 | 0.3 | 0.60 | 0/750 |

Table 2 illustrates that the moisture resistance reliability of the multilayer electronic component is evaluated while fixing Lb/La and adjusting Wb/Wa.

Referring to Test Nos. 1 to 3 where Wb/Wa is 0.10, 0.20, and 0.30, it can be determined that defective products are generated in the moisture resistance reliability evaluation.

On the other hand, referring to Test Nos. 4 to 6 in which Wb/Wa is 0.40 or more, it can be determined that there are 0 defective products in the moisture resistance reliability evaluation.

When Wb/Wa is less than 0.40, moisture resistance reliability is not improved, which may be one cause of distribution of a distance between the internal electrodes 121 and 122 and the fifth and sixth surfaces 5 and 6, spaced apart from each other, increases.

Accordingly, when Wb/Wa satisfies 0.40 or more as in one embodiment of the present disclosure, it can be determined that the effect of improving moisture resistance reliability of the multilayer electronic component is excellent.

As set forth above, according to the various effects of the present disclosure, by forming a protruding portion protruding from a main portion of an internal electrode toward the fifth and sixth surfaces of the body, or forming a dummy electrode, not overlapping the internal electrode on a cover portion, moisture resistance reliability of the multilayer electronic component may be improved.

As one of the various effects of the present disclosure, a multilayer electronic component that can be determined as defective only by an appearance thereof, when an incorrect position is cut during a cutting process by forming a protruding portion protruding from a main portion of an internal electrode toward the fifth and sixth surfaces of the body, or forming a dummy electrode, not overlapping the internal electrode on a cover portion, may be provided.

Although the embodiments of the present disclosure have been described in detail above, the present disclosure is not limited by the above-described embodiments and the accompanying drawings, and is intended to be limited by the appended claims. Therefore, various forms of substitution, modification, and change will be possible by those skilled in the art within the scope of the technical spirit of the present disclosure described in the claims, which also falls within the scope of the present disclosure.

In addition, the expression 'one embodiment' used in the present disclosure does not refer to the same embodiment, and is provided to emphasize and describe different unique characteristics. However, one embodiment presented above is not excluded from being implemented in combination with features of another embodiment. For example, even if a matter described in one specific embodiment is not described in another embodiment, it can be understood as a description related to another embodiment, unless there is a description contradicting or contradicting the matter in the other embodiment.

Terms used in this disclosure are only used to describe one embodiment, and are not intended to limit the disclosure. In this case, singular expressions include plural expressions unless the context clearly indicates otherwise.

While example embodiments have been shown and described above, it will be apparent to those skilled in the art that modifications and variations could be made without departing from the scope of the present invention as defined by the appended claims.

## Claims

1. A multilayer electronic component, comprising:
a body including a dielectric layer and first and second internal electrodes alternately disposed with the dielectric layer interposed therebetween in a first direction, the body having first and second surfaces opposing each other in a first direction, third and fourth surfaces connected to the first and second surfaces and opposing each other in a second direction, and fifth and sixth surfaces connected to the first to fourth surfaces and opposing each other in a third direction;
a first external electrode disposed on the third surface; and
a second external electrode disposed on the fourth surface,
wherein the first internal electrode includes a first main portion having one end portion in contact with the third surface and the other end portion disposed to be spaced apart from the fourth surface, and a first protrusion protruding toward the fifth and sixth surfaces between the one end portion and the other end portion of the first main portion, and
the second internal electrode includes a second main portion having one end portion in contact with the fourth surface and the other end portion disposed to be spaced apart from the third surface, and a second protrusion protruding toward the fifth and sixth surfaces between the one end portion and the other end portion of the second main portion,
wherein, an average size of the body in the second direction is La, and an average size of the first and second protrusions in the second direction is Lb,
Lb/La satisfies 0.05 or more and 0.4 or less.

2. The multilayer electronic component of claim 1, wherein, an average size of the body in the third direction is Wa, and an average size of the first and second protrusions in the third direction is Wb,
Wb/Wa satisfies 0.4 or more and 0.6 or less.

3. The multilayer electronic component of claim 1, wherein the first and second protrusions are disposed to be spaced apart from the fifth and sixth surfaces.

4. The multilayer electronic component of claim 1, wherein the first and second protrusions are disposed to be spaced apart from the third and fourth surfaces.

5. The multilayer electronic component of claim 1, wherein corners of the first and second protrusions have a rounded shape.

6. The multilayer electronic component of claim 1, wherein the body comprises a capacitance formation portion in which the dielectric layer and the first and second internal electrodes are alternately disposed in the first direction, and a cover portion disposed on one surface and the other surface of the capacitance formation portion in the first direction,
wherein the cover portion includes a plurality of dummy electrodes disposed to be spaced apart from each other in the third direction.

7. The multilayer electronic component of claim 6, wherein the dummy electrodes do not overlap the first and second main portions in the first direction.

8. The multilayer electronic component of claim 6, wherein the dummy electrodes are disposed to be spaced apart from the fifth and sixth surfaces.

9. The multilayer electronic component of claim 6, wherein the dummy electrodes are disposed to be spaced apart from the third and fourth surfaces.

10. The multilayer electronic component of claim 6, wherein corners of the dummy electrodes have a rounded shape.

11. The multilayer electronic component of claim 6, the dummy electrodes do not overlap the internal electrodes along the third direction and the first direction.
